# EUROPEAN PATENT SPECIFICATION

(11) **EP 2 228 162 B1**
(45) Date of publication and mention of the grant of the patent: **09.08.2017**
(21) Application number: 10002343.1
(22) Date of filing: 08.03.2010
(51) Int. Cl.: B23K 11/28

(54) **Suspendable resistance spot welding gun**
Hängbare Punktschweissvorrichtung
Pince de soudage par point suspendue

(30) Priority: 10.03.2009 IT TO20090177
(43) Date of publication of application: 15.09.2010
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- EP-A1- 1 782 909
- JP-A- 10 296 457

## Description

The present invention refers to resistance spot welding guns, which can be used, for example, for carrying out welding operations on motor vehicle body members, during which the guns need to be kept suspended in order to be moved in the space, either manually by an operator or by a robotized driving device such as the arm of an anthropomorphic robot, or need to be suspended on a stationary support base in which case a workpiece to be welded is moved by a handling apparatus.

More specifically, the invention relates to a gun of the type defined in the preamble of appended claim 1.

A welding gun of the type mentioned above is known for example from EP-A-1 782 909. The structure of the gun of this document comprises a circular plate support member by which the gun is articulably suspended so that it can be directed in the space according to different axis and directions, in order to allow the welding electrodes to be positioned at the zones of a workpiece in which weldings have to be carried out. The plate support member is arranged in a barycentric position, intermediate between two electrode holder arms, on the one side, and a transformer unit and a linear actuator for controlling a movable holder arm, on the other side. A pair of parallel brackets that extend in a wide through central opening of the plate member, carry, at one end thereof, a clamp for fastening a stationary electrode holder arm of the gun. The other end of the brackets, at the side opposite with respect to the plate member, is crossed by a transverse pin that supports, cantilever and in a swingabe manner, the body of the linear actuator. The linear actuator comprises a slidable rod extending within the opening of the support member, and engaging a transverse bar connected to the movable arm of the gun.

The structure of this known gun is such that, when a welding operation is performed, the compressive stress applied to the two electrode holder arms, and therefore to the respective welding electrodes, is discharged partially on the rod of the linear actuator, and partially on the pin of articulation that supports the linear actuator. In this manner, the pin of articulation of the linear actuator is a critical member for the determination of the maximum compressive stress allowable by the welding gun. In fact, in order to allow the gun to support a high compressive stress, the structure of the gun, and particularly of the aforesaid pin of articulation and of the portions of the brackets to which it is connected, need to be very stout and therefore heavy, which negatively affects the inertia of the clamp and, in particular, gets worse the capability to move the gun in the space in a precise and fast manner.

More specifically, the structure of the clamp of this document is little adapted to being used for performing weldings that require a high force of compression to be applied to the welding electrodes, such as in the case of spot weldings, which may require a compressive load to be applied to the electrodes of the order of the hundreds of kilograms.

JP-10-296457 discloses a suspendable resistance spot welding gun, comprising a bearing structure adapted to be connected to support and/or articulation means of the gun, and including a support member, a first electrode holder arm stationary mounted with respect to the bearing structure by bracket means, and a second electrode holder arm movable with respect to the first arm, the movement of the second arm being controlled by a linear actuator the body of which is associated with the bearing structure. Both the electrode holder arms are provided with respective welding electrodes movable to each other as a result of the movement of the second arm, and powered by an electric current delivered by a trasformer unit. The bracket means are rigidly connected to an end portion of the body of the linear actuator, and are rotatably connected to the support member in order to allow the position of the bracket means together with the body of the linear actuator to be adjusted with respect to the support member. The position of the support member is fixable with respect to the bracket means by bolts.

The main object of the invention is to propose a welding gun adapted to support a very high compressive stress of the electrode holder arms so that it can be used in an effective manner for carrying out spot weldings, and the structure of which is at the same time relatively light, so that it involves low inertias in order not to limit the quickness and precision of its movements, as well as to make simpler and safe the suspension of the gun.

This object is reached by virtue of a gun having the features mentioned in claim 1. In particular, the gun comprises bracket means rigidly connected with an end portion of the body of the linear actuator through the support member, so that the support member constitutes a single body both with the bracket means and with the body of the linear actuator.

By virtue of this idea of solution, the structure of the welding gun according to the invention allows the load applied to the electrode holder arms to be discharged directly on the support member, which makes therefore the gun very stout and relatively light. Also, the transformer unit is fixed to the support member, so that the support member constitutes the main bearing member for the loads applied to the gun.

According to a preferred feature of the invention, the support member consists of a plate, and the bracket means are connected to a first face of the plate support member by connection means extending through it and engaging corresponding seats of a base portion of the body of the linear actuator, adjacent to the second face of the plate support member.

In this manner, the gun of the invention has a relatively simple structure, to full advantage of the reliability in use, and it is at the same time economical to be manufactured.

The invention will be made clearer by the following detailed description, referred to the appended drawings, provided as a non-limitative example, which show preferred embodiments thereof, and in which:
figure 1 is a schematic perspective view of a welding gun according to a first embodiment of the invention,
figure 2 is a front elevational view sectioned along a transverse plane of the gun of figure 1, from arrow II,
figure 3 is a view of the gun of figure 1 from which an outer covering as well as part of its suspension system have been removed,
figure 4 is an enlarged view of a detail indicated by arrow IV in figure 1,
figure 5 is a schematic perspective view showing part of the elements of the gun of figure 3, particularly the support member, the linear actuator and the transformer unit, as well as a pair of support brackets of the stationary electrode holder arm,
figure 6 is an enlarged perspective view of the support member indicated by arrow VI in figure 5,
figure 7 is an enlarged view of detail sectioned along line VII-VII in figure 2, showing how the support brackets of the stationary electrode holder arm are fixed to the support member and to the body of the linear actuator,
figure 8 is a schematic perspective view of a second embodiment of a welding gun according to the invention, showing the bearing structure thereof lacking in the electrode holder arms,
figure 9 is a schematic side elevational view sectioned along a longitudinal median plane of figure 8, from arrow IX,
figure 10 is a schematic perspective view similar to figure 8, of a modification of the second embodiment of the invention, and
figure 11 is a side elevational view sectioned along a longitudinal median plane of figure 10, from arrow XI.

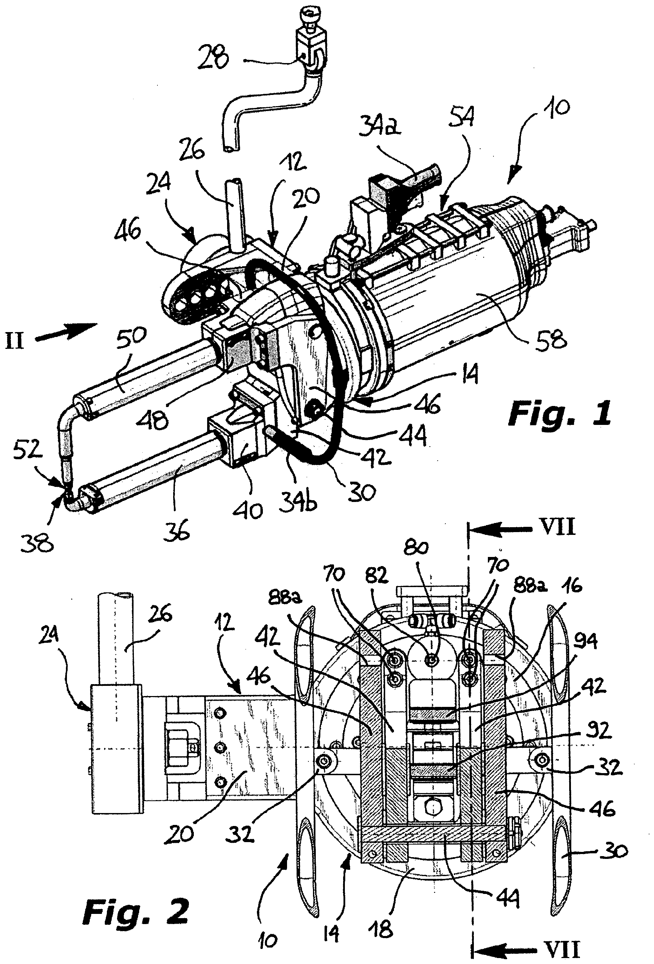

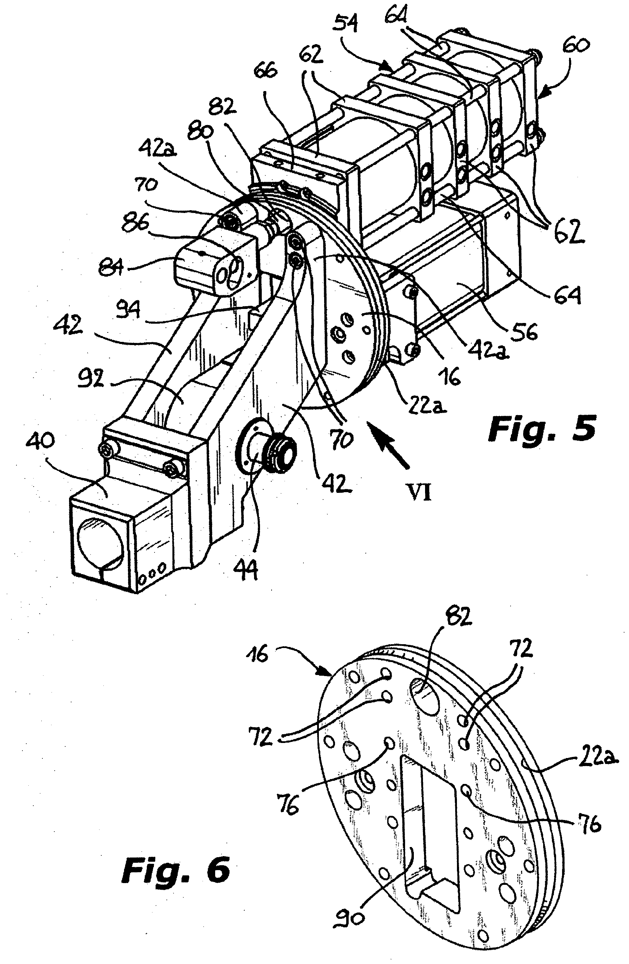

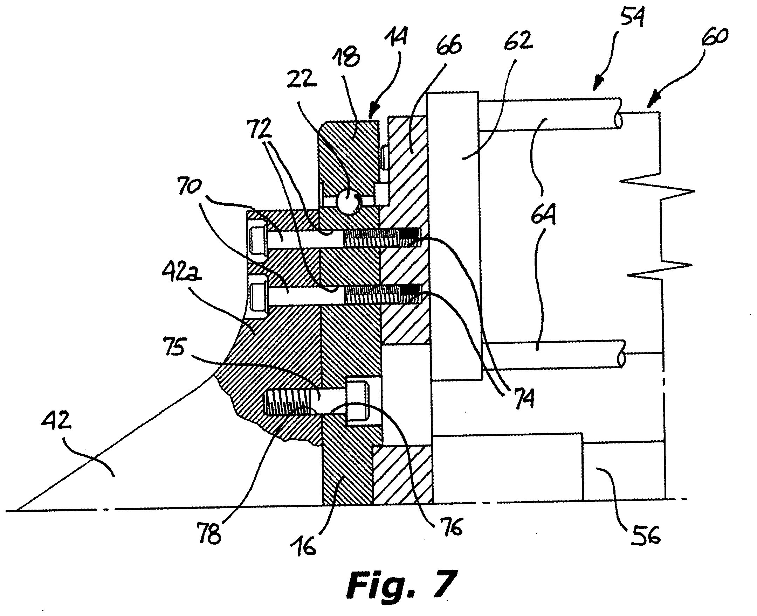

With initial reference to figures 1 to 7, a welding gun according to a first embodiment of the invention is indicated 10 in its whole.

The gun 10, which is of the type adapted to be controlled manually by an operator, comprises an intermediate portion provided with a barycentric system allowing it to be supported and articulated, indicated 12 in general. The system 12 includes a main bearing 14 adapted to allow the gun 10 to rotate about a longitudinal main axis thereof, which comprises an inner ring 16, forming a main support member of the gun 10, and an outer ring 18. The rings 16 and 18 have mutually facing rolling races 22a to allow rotary members, such as balls 22, to slide.

A cantilever support arm 20 extends radially from the outer ring 18, outwardly from the bearing 14. A secondary bearing 24, the axis of which is parallel to the arm 20, is connected to the arm 20 to allow the gun 10 to rotate transversely with respect to its longitudinal axis, according to a pitch movement. A S-shaped upright 26 projects radially upwards from the outer ring of the bearing 24, an upper end of which is intended to be connected and articulated in 28 to a overhead suspension device, in a manner known per se.

In order to allow an operator to control the position in the space of the gun 10, it comprises a maneuver handwheel 30 fixed to the inner ring of the bearing 14 by connection members 32, as well as a pair of upper and side handles 34a and 34b, respectively.

In its front portion, the gun 10 is provided with a pair of electrode holder arms, which are movable one with respect to the other, and are provided with respective welding electrodes. In particular, the gun 10 comprises a lower tubular electrode holder arm 36 provided with an electrode 38, stationary mounted with respect to the inner ring 16 of the bearing 14 by means of a clamp 40. The clamp 40 is fixed to a first end of a pair of brackets 42 extending cantilever along a generally tilted direction with respect to the longitudinal axis of the gun 10.

The brackets 42, conveniently made of light alloy, are crossed in a middle position by a transverse pin of rotation 44 to which first ends of a pair of L-shaped arms of articulation 46 are pivoted, which are also conveniently of light alloy, outside of the brackets 42. A clamp 48 is fixed to the second ends of the arms 46, on the side opposite to the pin 44, in order to allow an upper tubular electrode holder arm 50 to be secured. By virtue of the pivoting of the arms 46 about the pin 44, the electrode holder arm 50 is swingably mounted with respect to the electrode holder arm 36, and therefore the electrode 52 can be moved angularly with respect to the electrode 38.

The electrode holder arms 36 and 50 are usually made of copper or relevant alloys, are insulated with respect to the clamps 40 and 48 by respective insulating gaskets (not shown), and are cooled by inner water circulation, in a manner known per se.

As an alternative, instead of the articulated type described above, the relative movement of the electrodes 38 and 52 could be of the translational type, in which case the movable electrode 52 is adapted to move along a rectilinear path to-and-from the stationary electrode 38, and has, in this case, a substantially a C-shaped general configuration, according to an arrangement known per se in the art.

The rear portion of the gun 10 mainly includes a linear actuator 54 intended to control the movement of the movable electrode holder arm 50, and a transformer unit 56 for feeding an electrical welding current to the electrodes 38 and 52, as well as relevant electrical wirings and ducts for flowing service fluids. Usually, in the complete configuration of the gun 10, its rear portion including the actuator 54 and the transformer unit 56, is sheathed by a covering 58 shown in figure 1.

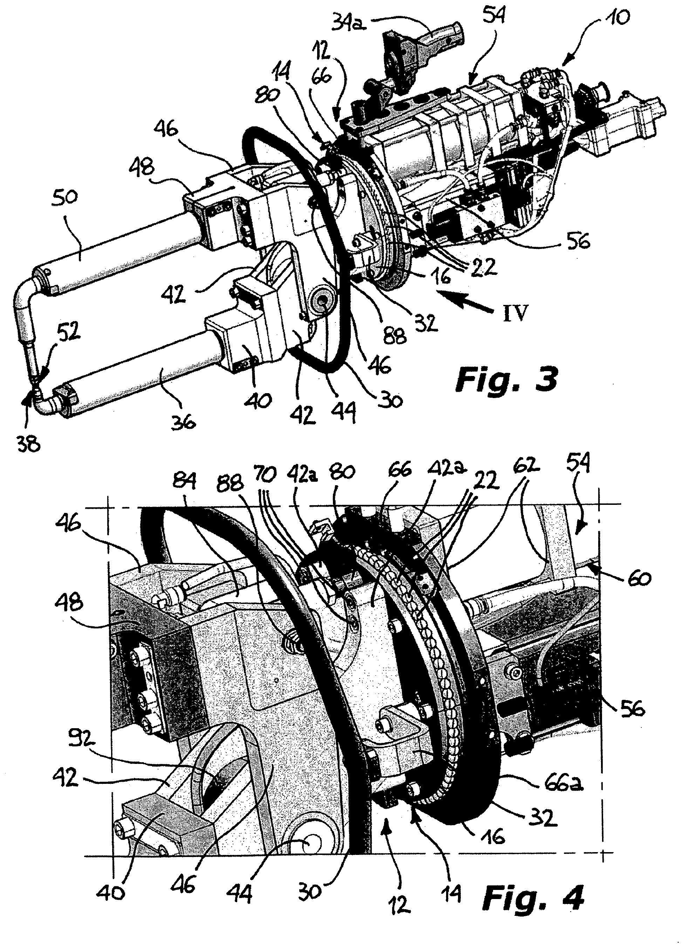

With particular reference to figures 3 to 7, the actuator 54 has a body 60 the structure of which comprises a plurality of segments 62 interconnected by screw studs 64, and which is fixed in a manner known per se, typically by means of fastening screws (not shown in detail), to a base plate 66 arranged adjacent to the back face (with reference to the figures) of the inner ring 16 of the bearing 14. A pair of symmetrical wings 66a, shaped as circular segments, can be associated to the base plate 66, at opposite sides, in order to make, together with the base plate 66, a member having a substantially circular shape corresponding to that of the ring 16.

Each bracket 42 bears on the front surface of the inner ring 16 by a respective end foot 42a. A pair of adjacent holes are formed in each end foot 42a of the brackets 42, in which respective screws 70 are inserted, said screws crossing also respective through holes 72 of the inner ring 16, and having threaded ends projecting from the ring 16 so as to engage threaded holes 74 of the plate 66. In this manner, the brackets 42 are rigidly connected with the inner ring 16 and with the plate 66 and, through the latter, with the body 60 of the actuator 54 which is arranged adjacent to the rear face of the ring 16, so that the brackets 42 form a single body with the body 60 of the actuator 54 and with the inner ring 16, which performs the function of a main support member for the gun 10.

By virtue of such a structure, the stresses exchanged between the body of the actuator 54 and the electrode holder arms 36 and 50 are transmitted directly through the brackets 42, which allow the ring 16 to be made relatively thin, to full advantage of the reduction of the total weight of the gun 10, without any negative influence on the stress resistance of the gun itself.

One or more auxiliary fixing screws 75 are usually associated to each bracket 42 in order to fix permanently it to the inner ring 16. To such a purpose, one or more through holes 76 are formed in the ring 16, to allow a respective screw 75 to be inserted, the thread of which engage a threaded hole 78 formed in a base portion of the respective bracket 42, which base portion faces the front face of the ring 16, at the side opposite to the clamp 40.

In a manner known per se, the actuator 54 has a slidable stem 80 crossing, with a clearance, a hole 82 formed in the ring 16 in a central position between the holes 72, in such a manner that the stem 80 projects from the front face of the ring 16. A transmission unit is fixed to the free end of the stem 80, typically in an axially adjustable manner. Such a transmission unit includes a block 84 in which an arched slot 86 is formed, which slot is intended to be slidably engaged by a transverse bar 88, parallel to the pin 44 and connected to both the arms of articulation 46 at through holes 88a formed at position adjacent to their intermediate elbow portions.

The ring 16 has a through wide opening 90 below the hole 82, close to which, at its rear side, the transformer unit 56 is fixed by fastening means known per se and not shown in detail, for example screws. A pair of conductors 92 and 94 extend through the opening 90, which are connected in a manner known per se on the one side with the clamps 40 and 48, and on the other side with the secondary of the transformer 56, respectively, with the aim of feeding with electrical current the electrodes 38 and 52 supported by the arms 36 and 50, at least the conductor 94 being of the flexible type.

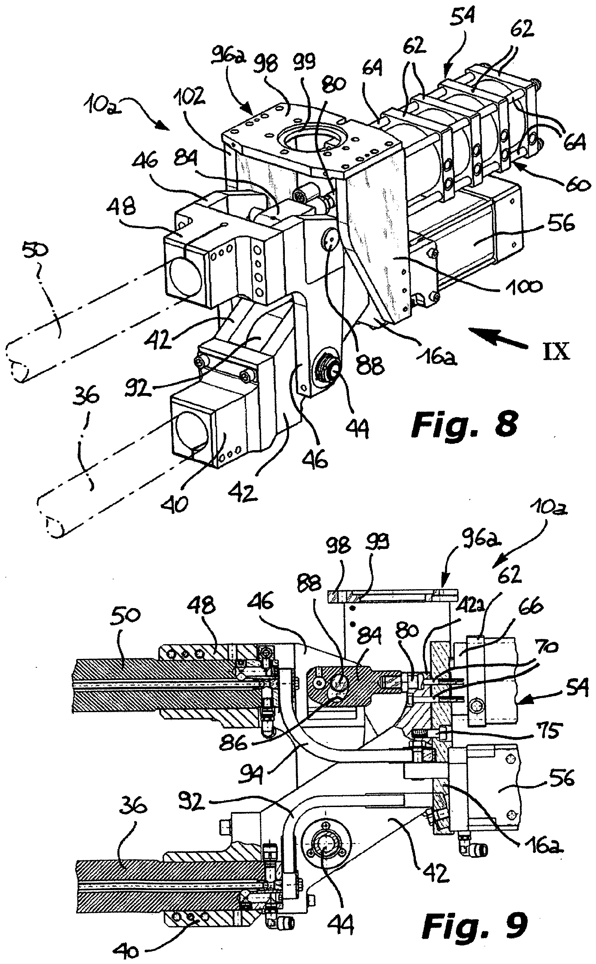

A second embodiment of the invention is shown in figures 8 to 11, of which figures 8, 9 and 10, 11 refer, respectively, to two modifications of welding guns which are adapted to be suspended to a handling robot arm, for example of the anthropomorhic type so that their movement in the space can be controlled automatically, or, as an alternative, are adapted to be suspended to a stationary column shaped support base, in which case the workpiece to be welded is intended to be moved by a handling apparatus known per se.

In these figures, elements equal or similar to those of the previous embodiment have been indicated with the same numeral references, and, in the following, mainly the parts different from those already described previously, will be described.

With reference to figures 8 and 9, the welding gun, here indicated 10a, comprises a frame 96a, preferably made by light alloy members, for supporting the welding equipment that includes the two electrode holder arms 36 as well as the actuator 54 and the transformer unit 56.

The frame 96a, intended to be suspended to the wrist of a robot (not shown) in order to allow the gun 10a to be moved, or to the aforesaid column base, essentially comprises an upper head 98 in which a seat 99 is formed for the engagement of the wrist of the robot or of the support base, and from which a pair of substantially trapezoidal shaped parallel flanks 100, 102, fixed to the opposite side edges of the head 98 by conventional connection means, extend downwards.

The larger base of the flanks 100, 102, which faces the actuator 54, is fixed by connection means, such as fixed joint formations and/or fastening screws, to the opposite side edges of a support plate 16a having a general rectangular shape, the function of which, similarly to that of the ring 16 of the previous embodiment, is to constitute the main support member of the gun 10a.

The transformer unit 56 is also fixed at a wide opening, which cannot be seen in the drawings but which is quite similar to the opening 90 of the ring 16 of the previous embodiment, on the rear face of the plate 16a, at the side opposite to the electrode holder arms 36 and 50.

In this case, each bracket 42 is fixed to the plate 16a by a pair of screws 70 the threads of which engage threaded holes formed in the base plate 66 of the actuator 54. Usually, also auxiliary screws 75 are provided, which screws cross through holes of the plate 16a in order to engage threaded holes formed on the basis of the brackets 42, in a position adjacent to the plate 16a. Also the transformer unit 56 is fixed in a manner known per se to the plate 16a.

In this manner, the brackets 42 are rigidly connected to the body 60 of the actuator 54 and to the transformer unit 56 through the plate 16a, the latter carrying out the function of a support member for the gun 10a, and therefore to the frame 96a, in such a manner that the brackets 42 form a single body with the frame 96a. In particular, the stresses exchanged between the actuator 54 and the electrode holder arms 36 and 50 are transmitted directly through the brackets 42, so that the plate 16a can be relatively thin, to full advantage of the reduction of the overall weight of the gun 10a.

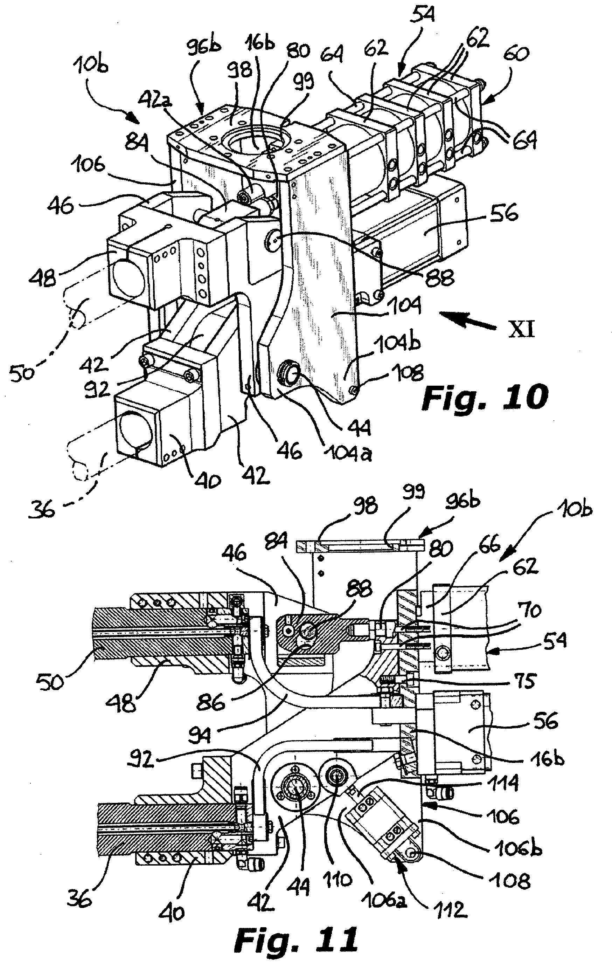

In figures 10 and 11, a modification of the welding gun of the second embodiment is shown, which is here indicated 10b, in general. The clamp 10b comprises a frame 96b, similar to the frame 96a of the previous modification, also intended to be suspended from the wrist of a robot, or from a stationary support base.

A pair of parallel flanks 104, 106 having a general rectangular shape, extend from the upper head 98 of the frame 96b towards the bottom. Such flanks have respective front appendages 104a, 106a, at an outer position with respect to the brackets 42, in which the opposite ends of the pin 44 are engaged, as well as respective lower appendages 104b, 106b, at the side opposite to the head 98, to which the opposite ends of a transverse rod 108, parallel to the hinge 44, are fixed.

A generally rectangular plate 16b is arranged between the flanks 104 and 106, which plate carries out a support function similar to that of the ring 16 of the previous embodiment, that is to constitute the main support member of the gun 10b. The plate 16b is slidably mounted with respect to the flanks 104 and 106, owing to the presence of a gap between such flanks and the respective side edges of the plate 16b.

The two brackets 42 are fixed to the plate 16b by pairs of screws 70 engaging also the base plate 66 of the body 60 of the actuator 54, such brackets 42 being usually connected to the plate 16b also through auxiliary screws 75 crossing the plate 16b and engaging threaded holes formed at the basis of the brackets 42.

Also the transformer unit 56 is mounted on the rear face of the plate 16b at a wide opening similar to the opening 90 of the ring 16 of the previous embodiment.

Another transverse rod 110, parallel to the rod 108, has the opposite ends fixed to the two brackets 42, at a substantially intermediate position between the hinge 44 and the plate 16b. An auxiliary linear actuator 112, so-called "of compensation", is operatively interposed between the two rods 108 and 110, and it is operable for changing the attitude of the welding plane of the gun 10b, and in order to cause oscillation about the axis of the pin of articulation 44, of the welding equipment comprising the clamps 40 and 48, the relevant electrode holder arms 36 and 50, as well as their electrodes 38 and 52, for the purpose of balancing.

The body of the auxiliary actuator 112, in a manner known per se, is articulated to the transverse rod 108, and a slidable rod 114, the free end of which is articulated to the transverse rod 110 between the brackets 42, extends from it.

The auxiliary actuator 112 allows also the whole welding equipment to be kept in a predetermined and repeatable configuration in the space, when it is in a non-operative condition, for example during a step in which the gun 10b is moved, with the electrodes 38 and 52 separated to each other.

Also in this case, the brackets 42 are rigidly connected with the body 60 of the actuator 54 and with the transformer unit 56 through the plate 16b, the latter carrying out the function of a main support member of the gun 10b, and therefore with the frame 96b, in such a manner that the brackets 42 form a single body with the frame 96b. In particular, the stress exchanged between the actuator 54 and the electrode holder arms 36 and 50 are transmitted directly through the brackets 42, so that the plate 16b can be relatively thin, to full advantage of the reduction of the overall weight of the gun 10b.

Also in the second embodiment, with reference to the two modifications shown in figures 8, 9 and 10, 11, respectively, the relative movement of the electrodes 38 and 52 can be of the articulated type, such as described in the first embodiment, or, as an alternative, of the translational type in which the electrode 52 is movable along a rectilinear path to-and-fro the stationary electrode 38 that, in this case, will have a substantially C-shaped general configuration, according to an arrangement known per se in the art.

## Claims

1. Suspendable resistance spot welding gun, comprising a bearing structure adapted to be connected to support and/or articulation means of the gun, a first electrode holder arm (36) stationary mounted with respect to the bearing structure by bracket means (42), and a second electrode holder arm (50) movable with respect to the first arm (36), the movement of the second arm (50) being controlled by a linear actuator (54) the body (60) of which is associated with the bearing structure, both the electrode holder arms (36, 50) being provided with respective welding electrodes (38, 52) which are movable relative to each other as a result of the movement of second arm (50), and being powered by an electric current delivered by a transformer unit (56) associated with the bearing structure, the bearing structure including a support member (16; 16a; 16b) generally interposed between the linear actuator (54) and the transformer unit (56), on the one side, and the electrode holder arms (36, 50), on the other side,
**characterized in that** said bracket means (42) are rigidly connected to an end portion (66) of the body (60) of the linear actuator (54) through the support member (16; 16a; 16b), so that the support member (16; 16a; 16b) constitutes a single body both with the bracket means (42) and with the body (60) of the linear actuator (54).

2. Welding gun according to claim 1, **characterized in that** the support member consists of a plate (16; 16a; 16b), and the bracket means (42) are connected at a first face of the plate support member (16; 16a; 16b) by connection means (70) extending through it and engaging corresponding seats (74) of a base portion (66) of the body (60) of the linear actuator (54), said base portion (66) being adjacent to the second face of the plate support member (16; 16a; 16b).

3. Welding gun according to claim 2, **characterized in that** said connection means are fastening screws (70).

4. Welding gun according to claim 2 or 3, **characterized in that** said bracket means consist of a pair of cantilever brackets (42), a holding clamp (40) being fixed at one end of said cantilever brackets (42) for holding the stationary electrode holder arm (36).

5. Welding gun according to any one of claims 2 to 4, **characterized in that** said linear actuator (54) has a slidable stem (80) crossing a hole (82) of said plate (16; 16a; 16b) with a clearance, and which is connected to said movable electrode holder arm (50).

6. Welding gun according to claim 5, **characterized in that** the movable electrode holder arm (50) is translatably mounted along a rectilinear path, so that the movable electrode (52) is adapted to be moved, as a result of the movement of the slidable stem (80) of the linear actuator (54), to-and-fro the stationary electrode (38) carried by the stationary electrode holder arm (36).

7. Welding gun according to claim 5, **characterized in that** the movable electrode holder arm (50) is swingably mounted with respect to the stationary electrode holder arm (36), in order that the movable electrode (52) is angularly movable with respect to the stationary electrode (38).

8. Welding gun according to claim 7, **characterized in that** the movable electrode holder arm (50) is supported by a respective clamp (48) fixed to a pair of arms of articulation (46) pivoted to said bracket means (42) by a pin of rotation (44).

9. Welding gun according to claim 8, **characterized in that** the end of said stem (80) opposite to the linear actuator (54) is provided with an arched slot (86) slidably engaged by a bar (88) mounted transversely with respect to said arms of articulation (46), and parallel to the pin of rotation (44).

10. Welding gun according to any one of claims 2 to 9, **characterized in that** said support plate (16; 16a; 16b) has a through opening (90) close to which the transformer unit (56) is fixed, and through which conductors (92, 94) for the electrical connection of the transformer unit (56) with said welding electrodes (38, 52) extends.

11. Welding gun according to any one of claims 2 to 10, **characterized in that** it is a manually controlled welding gun (10), and **in that** said support plate consists of the inner ring (16) of a rolling bearing (14) the outer ring (18) of which is articulably connected to a suspension device (20, 24, 26, 28) of the gun (10).

12. Welding gun according to claim 11, **characterized in that** it comprises a maneuver handwheel (38) and/or at least a handle (34a, 34b) associated with said plate support member (16).

13. Welding gun according to any one of claims 2 to 12, **characterized in that** it consists of a welding gun (10a; 10b) which can be associated with one end of a robotized arm or with a stationary support base, and **in that** said plate (16a; 16b) is connected to a frame (96b; 96b) including a head (98) adapted for suspending the clamp (10a; 10b), a pair of flanks (100, 102; 104, 106) of the frame (96a; 96b) being connected to the sides of the head (98).

14. Welding gun according to claim 13, **characterized in that** said flanks (100, 102) of the frame (96a) are rigidly connected to the plate support member (16).

15. Welding gun according to claim 13, **characterized in that** said flanks (104, 106) of the frame (96b) are spaced from the plate support member (16b), in such a manner that the frame (96b) is movable with respect to the plate support member (16b), both the flanks (104, 106) being crossed by said pin of rotation (44) and a transverse rod (108) extending parallel to the pin of rotation (44) being provided, the opposite ends of said rod (108) being engaged with respective appendages (104b, 106b) of said flanks (104, 106) which are arranged at the side opposite with respect to the head (98), an auxiliary linear actuator (112) being operatively interposed between said transverse rod (108) and an auxiliary cross member (110) parallel to the transverse rod (108), which auxiliary actuator (112) is associated with said bracket means (42) in a position intermediate between the pin of rotation (44) and the plate support member (16b).

16. Welding gun according to claim 15, **characterized in that** said auxiliary actuator (112) has a body articulated to said transverse rod (108), and a slidable rod (114) the free end of which is articulated to said auxiliary cross member (110).

## Patentansprüche

1. Hängende Widerstandspunktschweißzange, umfassend eine Haltevorrichtung, geeignet zur Verbindung mit Lager- und/oder Schwenkmitteln für die Zange, einen ersten Elektrodenhaltearm (36), der über Stützmittel (42) an der Haltevorrichtung angebracht ist, sowie einen zweiten Elektrodenhaltearm (50), der relativ zu dem ersten Arm (36) beweglich ist, dessen Bewegung durch einen Linearantrieb (54) steuerbar ist, dessen Gehäuse (60) mit der Haltevorrichtung verbunden ist, wobei beide Haltearme (36, 50) Schweißelektroden (38, 52) aufnehmen, die in Abhängigkeit von der Bewegung des zweiten Arms (50) relativ zueinander verstellbar und durch einen Strom motorisch angetrieben sind, der von einer Transformatoreinheit (56) erzeugt wird, die mit der Haltevorrichtung verbunden ist, welche ein Lager (16; 16a; 16b) aufweist, das auf einer Seite zwischen den Linearantrieb (54) und die Transformatoreinheit (56) und auf der anderen Seite zwischen die Elektrodenhaltearme (36, 50) eingesetzt ist, **dadurch gekennzeichnet, dass** die Stützmittel (42) mit einem Endabschnitt (66) des Gehäuses (60) des Linearantriebs (54) über das Lager (16; 16a; 16b) fest verbunden sind, so dass dieses sowohl mit den Stützmitteln (42) als auch mit dem Gehäuse (60) des Linearantriebs (54) einen zusammenhängenden Einzelkörper bildet.

2. Schweißzange nach Anspruch 1, **dadurch gekennzeichnet, dass** das Lager die Form einer Platte (16; 16a; 16b) hat und die Stützmittel (42) an einer ersten Fläche des plattenförmigen Lagers (16; 16a; 16b) über Verbindungsmittel (70) angebracht sind, die sich durch dieses erstrecken und in entsprechende Sitze (74) eines Basisabschnittes (66) des Gehäuses (60) des Linearantriebs (54) eingreifen, wobei der Basisabschnitt (66) an die zweite Seite des plattenförmigen Lagers (16; 16a; 16b) angrenzt.

3. Schweißzange nach Anspruch 2, **dadurch gekennzeichnet, dass** die Verbindungsmittel aus Befestigungsschrauben (70) bestehen.

4. Schweißzange nach Anspruch 2 oder 3, **dadurch gekennzeichnet, dass** die Stützmittel (42) aus einem Paar von Auslegertragarmen (42) bestehen, an deren einem Ende eine Klemmbacke (40) befestigt ist, um den stationären Elektrodenhaltearm (36) aufzunehmen.

5. Schweißzange nach einem der Ansprüche 2 bis 4, **dadurch gekennzeichnet, dass** der Linearantrieb (54) eine Schieberstange (80) hat, die sich mit Spiel durch eine Öffnung (82) des plattenförmigen Lagers (16; 16a; 16b) erstreckt und mit dem beweglichen Elektrodenhaltearm (50) verbunden ist.

6. Schweißzange nach Anspruch 5, **dadurch gekennzeichnet, dass** der bewegliche Elektrodenhaltearm (50) auf einer Geraden verschiebbar gelagert ist, so dass die bewegliche Elektrode (52) entsprechend der Bewegung der Schieberstange (80) des Linearantriebs (54) in Richtung auf die stationäre Elektrode (38) und von dieser weg verstellbar ist, welche von dem beweglichen Elektrodenhaltearm (36) aufgenommen wird.

7. Schweißzange nach Anspruch 5, **dadurch gekennzeichnet, dass** der bewegliche Elektrodenhaltearm (50) relativ zu dem stationären Elektrodenhaltearm (36) schwenkbar ist, so dass die bewegliche Elektrode (52) bezüglich der stationären Elektrode (38) winkelbeweglich ist.

8. Schweißzange nach Anspruch 7, **dadurch gekennzeichnet, dass** der bewegliche Elektrodenhaltearm (50) an einer zugehörigen Klemmbacke (48) angebracht ist, die an einem Paar von Schwenkarmen (46) befestigt ist, welche über einen Drehzapfen (44) an den Stützmitteln (42) angelenkt sind.

9. Schweißzange nach Anspruch 8, **dadurch gekennzeichnet, dass** das von dem Linearantrieb (54) abgewandte Ende der Schieberstange (80) einen bogenförmigen Schlitz (86) aufweist, in den eine Stange (88) gleitend eingreift, die quer zu den Schwenkarmen (46) und parallel zu dem Drehzapfen (44) gelagert ist.

10. Schweißzange nach einem der Ansprüche 2 bis 9, **dadurch gekennzeichnet, dass** das plattenförmige Lager (16; 16a; 16b) eine durchgehende Öffnung (90) hat, in der die Transformatoreinheit (56) befestigt ist und durch die Leitungen (92, 94) für die elektrische Verbindung der Transformatoreinheit (56) mit den Schweißelektroden (38, 52) verlaufen.

11. Schweißzange nach einem der Ansprüche 2 bis 10, **dadurch gekennzeichnet, dass** diese aus einer manuell betätigten Schweißzange (10) besteht und dass das plattenförmige Lager aus dem Innenring (16) eines Wälzlagers (14) besteht, dessen Außenring (18) schwenkbar mit einer Aufhängevorrichtung (20, 24, 26, 28) der Schweißzange (10) verbunden ist.

12. Schweißzange nach Anspruch 11, **dadurch gekennzeichnet, dass** diese für die Betätigung ein Handrad (38) und/oder wenigstens einen Handgriff (34a, 34b) aufweist, der mit dem plattenförmigen Lager (16) verbunden ist.

13. Schweißzange nach einem der Ansprüche 2 bis 12, **dadurch gekennzeichnet, dass** diese aus einer Schweißzange (10a; 10b) besteht, die an einem Ende eines Roboterarms oder an einer stationären Trägerbasis anbringbar ist, und dass das plattenförmige Lager (16a; 16b) mit einem Rahmen (96a; 96b) verbunden ist, der einen Kopf (98) zum Aufhängen der Schweißzange (10a; 10b) hat, wobei ein Paar von Flanken (100, 102; 104, 116) des Rahmens (96a, 96b) an den Seiten den Kopfes (98) angebracht ist.

14. Schweißzange nach Anspruch 13, **dadurch gekennzeichnet, dass** die Flanken (100, 102) des Rahmens (96a) fest mit dem plattenförmigen Lager (16) verbunden sind.

15. Schweißzange nach Anspruch 13, **dadurch gekennzeichnet, dass** die Flanken (104, 106) des Rahmens (96b) von dem plattenförmigen Lager (16b) so beabstandet sind, dass der Rahmen (96b) relativ zu dem plattenförmigen Lager (16b) beweglich ist, wobei durch beide Flanken (104, 106) der Drehzapfen (44) verläuft und eine Querstange (108) vorgesehen ist, die parallel zu dem Drehzapfen (44) verläuft und deren gegenüberliegende Enden in entsprechende Fortsätze (104b, 106b) der Flanken (104, 106) eingreifen, die auf voneinander abgewandten Seiten des Kopfes (98) angeordnet sind, wobei ein Hilfslinearantrieb (112) zwischen die Querstange (108) und eine parallel zu der Querstange (108) verlaufende Hilfstraverse (110) eingesetzt ist und der Hilfsantrieb (112) in einer Stellung zwischen dem Drehzapfen (44) und dem plattenförmigen Lager (16b) mit den Stützmitteln (42) verbunden ist.

16. Schweißzange nach Anspruch 15, **dadurch gekennzeichnet, dass** der Hilfsantrieb (112) ein schwenkbar mit der Querstange (108) verbundenes Gehäuse sowie eine verschiebbare Stange (114) hat, deren freies Ende an der Hilfstraverse (110) angelenkt ist.

## Revendications

1. Pistolet suspendu de soudage par points par résistance, comprenant une structure formant palier adaptée pour être connectée à des moyens de support et / ou d'articulation du pistolet, un premier bras (36) de support d'électrode monté fixe par rapport à la structure formant palier par des moyens de support (42) et un deuxième bras (50) de support d'électrode, mobile par rapport au premier bras (36), le mouvement du deuxième bras (50) étant commandé par un actionneur linéaire (54) dont le corps (60) est associé à la structure formant palier, les deux bras (36, 50) de support d'électrode étant pourvus d'électrodes de soudage (38, 52) respectives qui sont mobiles l'une par rapport à l'autre par un mouvement du deuxième bras (50) et qui sont alimentées par un courant électrique délivré par une unité formant transformateur (56) associé à la structure formant palier, la structure formant palier comprenant un élément de support (16 ; 16a ; 16b) interposé d'une façon générale entre l'actionneur linéaire (54) et l'unité formant transformateur (56), sur un côté, et les bras (36, 50) de support d'électrodes, de l'autre côté,**caractérisé en ce que** lesdits moyens de support (42) sont reliés rigidement à une partie d'extrémité (66) du corps (60) de l'actionneur linéaire (54) à travers l'élément de support (16 ; 16a ; 16b), de sorte que l'élément de support (16 ; 16a ; 16b) constitue un seul corps, tant avec les moyens de support (42) qu'avec le corps (60) de l'actionneur linéaire (54).

2. Pistolet de soudage selon la revendication 1, **caractérisé en ce que** l'élément de support est constitué par une plaque (16 ; 16a ; 16b), et les moyens de support (42) sont reliés au niveau d'une première face de l'élément de support en plaque (16 ; 16a ; 16b) par des moyens de connexion (70) s'étendant à travers celui-ci et venant en engagement avec des sièges (74) correspondants d'une partie de base (66) du corps (60) de l'actionneur linéaire (54), ladite partie de base (66) étant adjacente à la deuxième face de l'élément de support en plaque (16 ; 16a ; 16b).

3. Pistolet de soudage selon la revendication 2, **caractérisé en ce que** lesdits moyens de connexion sont des vis de fixation (70).

4. Pistolet de soudage selon la revendication 2 ou la revendication 3, **caractérisé en ce que** lesdits moyens de support consistent en une paire de supports (42) en porte-à-faux, une pince de maintien (40) étant fixée à une extrémité desdits supports (42) en porte-à-faux pour maintenir le bras stationnaire (36) de support d'électrode.

5. Pistolet de soudage selon l'une quelconque des revendications 2 à 4, **caractérisé en ce que** ledit actionneur linéaire (54) présente une tige coulissante (80) traversant un trou (82) de ladite plaque (16 ; 16a ; 16b) avec un jeu, et qui est relié audit bras mobile (50) de support d'électrode.

6. Pistolet de soudage selon la revendication 5, **caractérisé en ce que** le bras mobile (50) de support d'électrode est monté de façon à pouvoir se déplacer en translation selon une trajectoire rectiligne, de sorte que l'électrode mobile (52) est apte à être déplacée, par suite du mouvement de la tige coulissante (80) de l'actionneur linéaire (54), en va-et-vient avec l'électrode stationnaire (38) portée par le bras stationnaire (36) de support d'électrode.

7. Pistolet de soudage selon la revendication 5, **caractérisé en ce que** le bras mobile (50) de support d'électrode est monté de façon basculable par rapport au bras stationnaire (36) de support d'électrode, afin que l'électrode mobile (52) soit mobile angulairement par rapport à l'électrode stationnaire (38).

8. Pistolet de soudage selon la revendication 7, **caractérisé en ce que** le bras mobile (50) de support d'électrode est supporté par une pince (48) respective fixée à une paire de bras d'articulation (46) montés pivotants par rapport auxdits moyens de support (42) par une broche de rotation (44).

9. Pistolet de soudage selon la revendication 8, **caractérisé en ce que** l'extrémité de ladite tige (80) opposée à l'actionneur linéaire (54) est pourvue d'une fente arquée (86), avec laquelle vient en engagement, de manière coulissante, une barre (88) montée transversalement par rapport auxdits bras d'articulation (46), et parallèle à la broche de rotation (44).

10. Pistolet de soudage selon l'une quelconque des revendications 2 à 9, **caractérisé en ce que** ladite plaque de support (16 ; 16a ; 16b) présente une ouverture traversante (90) à proximité de laquelle est fixée l'unité formant transformateur (56), et à travers laquelle s'étendent des conducteurs (92, 94) pour la connexion électrique de l'unité formant transformateur (56) avec lesdites électrodes de soudage (38, 52).

11. Pistolet de soudage selon l'une quelconque des revendications 2 à 10, **caractérisé en ce qu'**il s'agit d'un pistolet de soudage (10) à commande manuelle, et **en ce que** ladite plaque de support est constituée par la bague intérieure (16) d'un palier à roulement (14) dont la bague extérieure (18) est reliée de manière articulée à un dispositif de suspension (20, 24, 26, 28) du pistolet (10).

12. Pistolet de soudage selon la revendication 11, **caractérisé en ce qu'**il comprend un volant de manoeuvre (38) et / ou au moins une poignée (34a, 34b) associée audit élément de support de plaque (16).

13. Pistolet à souder selon l'une quelconque des revendications 2 à 12, **caractérisé en ce qu'**il consiste en un pistolet de soudage (10a ; 10b) qui peut être associé à une extrémité d'un bras robotisé ou à une base de support stationnaire, et **en ce que** ladite plaque (16a ; 16b) est reliée à un châssis (96b ; 96b) comprenant une tête (98) adaptée pour suspendre la pince (10a ; 10b), une paire de flancs (100, 102 ; 104, 106) du châssis (96a ; 96b) étant relié aux côtés de la tête (98).

14. Pistolet de soudage selon la revendication 13, **caractérisé en ce que** lesdits flancs (100, 102) du châssis (96a) sont reliés rigidement à l'élément de support en plaque (16).

15. Pistolet de soudage selon la revendication 13, **caractérisé en ce que** lesdits flancs (104, 106) du châssis (96b) sont espacés de l'élément de support en plaque (16b), de telle sorte que le châssis (96b) soit mobile par rapport à l'élément de support en plaque (16b), les deux flancs (104, 106) étant traversés par ladite broche de rotation (44) et une tige transversale (108) étant prévue, s'étendant parallèlement à la broche de rotation (44), les extrémités opposées de ladite tige (108) étant en engagement avec des appendices respectifs (104b, 106b) desdits flancs (104, 106) qui sont disposés sur le côté opposé par rapport à la tête (98), un actionneur linéaire auxiliaire (112) étant interposé de manière opérationnelle entre ladite tige transversale (108) et un organe traversant auxiliaire (110) parallèle à la tige transversale (108), lequel actionneur auxiliaire (112) est associé auxdits moyens de support (42) dans une position intermédiaire entre la broche de rotation (44) et l'élément de support en plaque (16b).

16. Pistolet de soudage selon la revendication 15, **caractérisé en ce que** ledit actionneur auxiliaire (112) présente un corps articulé à ladite tige transversale (108) et une tige coulissante (114) dont l'extrémité libre est articulée sur ledit organe traversant auxiliaire (110).
